Europäisches Patentamt

European Patent Office

Office européen des brevets

(19)

(11) Veröffentlichungsnummer: **0 379 231**
**A2**

(12) **EUROPÄISCHE PATENTANMELDUNG**

(21) Anmeldenummer: **90106333.9**

(22) Anmeldetag: **21.07.86**

(51) Int. Cl.⁵: **A01C 15/04**

(30) Priorität: **15.10.85 DE 3536695**

(43) Veröffentlichungstag der Anmeldung:
**25.07.90 Patentblatt 90/30**

(60) Veröffentlichungsnummer der früheren
Anmeldung nach Art. 76 EPÜ: **0 218 813**

(84) Benannte Vertragsstaaten:
**FR GB**

(71) Anmelder: **Amazonen-Werke H. Dreyer GmbH
& Co. KG
Am Amazonenwerk 9-13
D-4507 Hasbergen-Gaste(DE)**

(72) Erfinder: **Hülsmann, Werner
Voxtruper Strasse 118
D-4500 Osnabrück(DE)**

(54) **Pneumatikdüngerstreuer.**

(57) Die Erfindung betrifft einen Pneumatikdüngerstreuer, dessen Dosierelemente zumindest gruppenweise durch Unterbrechung des Antriebes stillsetzbar und so die Arbeitsbreite des Pneumatikdüngerstreuers stufenweise reduzierbar ist. Um die Arbeitsbreite in kleinstmöglichen Stufen reduzieren bzw.
vergrößern zu können, ist in der einen Ausführungsform vorgesehen, daß jeweils jeder Rohrleitung ein
Dosierelement zugeordnet ist und jedes Dosierelement für sich stillsetzbar ist.

EP 0 379 231 A2

## Pneumatikdüngerstreuer

Die Erfindung betrifft einen Pneumatikdüngerstreuer gemäß des Oberbegriffes des Anspruches 1.

Ein derartiger Pneumatikdüngerstreuer ist bereits durch die DE-PS 31 16 774 bekannt geworden. Dieser Düngerstreuer zeichnet sich durch fernbedienbare Kupplungen aus, die derart zwischen den Gruppen von Dosierelementen angeordnet sind, daß die Arbeitsbreite gruppenweise durch Unterbrechung des Antriebes für diese Dosierelemente in Richtung auf die Maschinenmitte reduzierbar ist. Derartig ausgebildete Düngerstreuer haben sich in der Praxis bewährt. Bei den immer größer werdenden Arbeitsbreiten der Maschinen ist es nicht mehr ausreichend, die Arbeitsbreite des Düngerstreuers durch ein gruppenweises Außerbetriebsetzen der Dosierelemente zu reduzieren. Die Stufen, in denen sich die Arbeitsbreite reduzieren läßt, sind sehr groß. Zur Anpassung der Streubreite des Düngerstreuers an die jeweiligen Einsatzbedingungen ist es jedoch häufig notwendig, eine kleinere abschnittsweise Reduzierung der Arbeitsbreite vorzunehmen, um sich so beispielsweise an verschiedene Fahrgassensysteme anpassen, oder Grenzstreuarbeiten am Feldrand durchführen zu können.

Des weiteren ist durch die DE-AS 28 51 797 ein Pneumatikdüngerstreuer bekannt, der zwischen den Dosierelementen und den Bodenplatten einen Teil der Dosierelemente abdeckende Absperrschieber aufweist, die sich von Mitte zu Mitte zweier einander benachbarter Dosierelemente erstrecken. Diese Absperrschieber sind ohne Werkzeug lösbar an den Bodenplatten anbringbar. Weiterhin ist es möglich, mit Hilfe der Absperrschieber einzelne, den Rohrleitungen zugeordnete Dosierelemente völlig abzuschalten. Mit den vor den Auslauföffnungen des Vorratsbehälters angeordneten Durchlaßschiebern ist es ebenfalls möglich, diese Auslauföffnungen gruppenweise zu verschließen. Mit Hilfe dieser Absperr- bzw. Durchlaßschieber ist also eine Veränderung der effektiven Streubreite als auch die Einstellung kleinerer Streumengen durchführbar. Ihr haftet jedoch der Nachteil an, daß ein wirksames Reduzieren der Streubreite in kleinen Stufen nur durch den Einbau mehrerer, einzelner Absperrschieber durchführbar ist. Dieses Reduzieren der Streubreite läßt sich zudem nur im Stillstand des Düngerstreuers durchführen, indem eine Bedienungsperson die Absperrschieber vor die Auslauföffnungen des Vorratsbehälters anbringt, wodurch die Düngerzufuhr zu den einzelnen Rohrleitungen unterbrochen wird.

Dadurch, daß jeder Auslauföffnung bzw. jeder Rohrleitung ein einzelner Absperrschieber bei einer Arbeitsbreitenreduzierung zugeordnet werden muß, müssen immer mehrere Absperrschieber eingesetzt werden. Da eine Streubreitenverringerung, die nicht gruppenweise durch den Einsatz der Durchlaßschieber durchgeführt werden kann, immer mit dem Einbau von mehreren Absperrschiebern zwischen Bodenplatten und Dosierelemente verbunden ist, weist der Pneumatikdüngerstreuer gemäß der DE-AS 28 51 797 einen erheblichen Nachteil hinsichtlich der Bedienbarkeit auf. Da es sich bei den Absperrschiebern um keine an der Maschine verbleibenden Verstellelemente handelt, lassen sich diese Schieber nicht über eine Fernbedienung betätigen. Eine Veränderung der Streubreite während des Streuvorganges ist nicht vom Schlepper aus möglich. Der Arbeitsvorgang muß also bei jeder Änderung der Streubreite unterbrochen werden, um den Ein- bzw. Ausbau der Absperrschieber vorzunehmen, was immer mit einem erheblichen Zeitaufwand verbunden ist.

Der Erfindung liegt nun die Aufgabe zugrunde, eine Veränderung der Arbeitsbreite des bekannten Pneumatikdüngerstreuer während des Streuvorganges in kleinst möglichen Abschnitten zu verwirklichen.

Diese Aufgabe wird erfindungsgemäß durch den kennzeichnenden Teil des Anspruches 1 gelöst. Infolge dieser Maßnahme läßt sich die die Zufuhr des auszubringenden Materiales zu den jeweils äußeren Rohrleitungen einer Gruppe von Rohrleitungen unterbrechen und so auf einfache Weise und mit einfachsten Mitteln eine kleinere abschnittsweise Reduzierung der bereits in größeren Abschnitten reduzierbaren Arbeitsbreite verwirklichen. Die Zuordnung einer Kupplung zu jedem Dosierelement stellt die kleinstmögliche Abstufung zum Verkleinern und Vergrößern der Arbeitsbreite dar, so daß in der Praxis eine äußerst genaue Anpassung der Arbeitsbreite der Maschine an die zu bestreuende Arbeitsbahn in einfacher Weise möglich ist. Hierdurch wird dem Benutzer die Möglichkeit geboten, die Düngerzufuhr an jeder beliebigen Stelle zu den einzelnen Rohrleitungen zu unterbrechen und wieder freizugeben, so daß er den Dünger auch in Streifen ausbringen kann, um so beispielsweise das Düngen von Hackfrüchten mit unterschiedlichen Reihenweiten und Arbeitsbreiten vornehmen zu können.

Die GB-20 21 710A beschreibt eine Sämaschine mit einer Abschalteinrichtung für einige Säräder, die den Fahrgassenspuren zugeordnet sind, um Fahrgassen (Trambine) anlegen zu können. Diese beschriebene Abschalteinrichtung besteht aus schaltbaren Kuppeleinrichtungen, die nur die den Fahrgassenspuren zugeordneten Dosierrädern mit

der Dosierwelle kuppeln, während die übrigen Dosierräder nicht abkuppelbar mit der Dosierwelle verbunden sind.

Infolge dieser Maßnahme läßt sich die Arbeitsbreite in besonders vorteilhafter Weise während des Streuvorganges verkleinern und vergrößern, so daß die Arbeitsbreite des Pneumatikdüngerstreuers während des Ausbringvorganges den jeweiligen Einsatzbedingungen angepaßt werden kann. Zudem wird der Zeitaufwand für das Ausbringen von Düngemitteln erheblich reduziert, da ein zeitaufwendiges Ein- und Ausbauen von Schiebern entfällt.

Hierbei ist vorgesehen, daß jedes Dosierelement zwischen zwei Seitenwänden in einem Sägehäuse angeordnet ist und daß jedem Dosierelement eine Bodenklappe zugeordnet ist.

Infolge dieser Maßnahmen wird der bekannte Pneumatikdüngerstreuer derart weitergebildet, daß in kleinstmöglichen Stufen die Arbeitsbreite reduziert bzw. vergrößert werden kann. Hierdurch wird es also auch möglich, sich geringen Arbeitsbreitenänderungen wie sie beispielsweise auf keilförmigen Nutzflächen vorkommen, anpassen zu können.

Weiterhin ist erfindungsgemäß vorgesehen, daß die Dosierelemente zusätzlich guppen- bzw. blockweise stillsetzbar sind. Neben der unabhängigen Einzelbetätigung der jeweils zwischen den Dosierelementen angeordneten Kupplungen ist es auch vorgesehen, die Kupplungen gruppenweise zu betätigen. Hierdurch ist es möglich, die Düngerzufuhr zu ganzen Teilbreiten des Verteilergestänges auf einmal zu unterbrechen, wenn dies während des Arbeitsvorganges notwendig wird.

Die Erfindung sieht zudem vor, daß zusätzlich zu den Einzelkupplungen Kupplungen für die gruppen- bzw. blockweise Abschaltung vorgesehen sind. Die zusätzliche Anordnung der Kupplungen zu den Einzelkupplungen stellt eine Entlastung für die Einzelkupplungen sowie eine Sicherung bei einem Versagen der Einzelkupplungen dar.

Weitere Einzelheiten der Erfindung sind der Beispielsbeschreibung sowie den Zeichnungen zu entnehmen. Hierbei zeigen

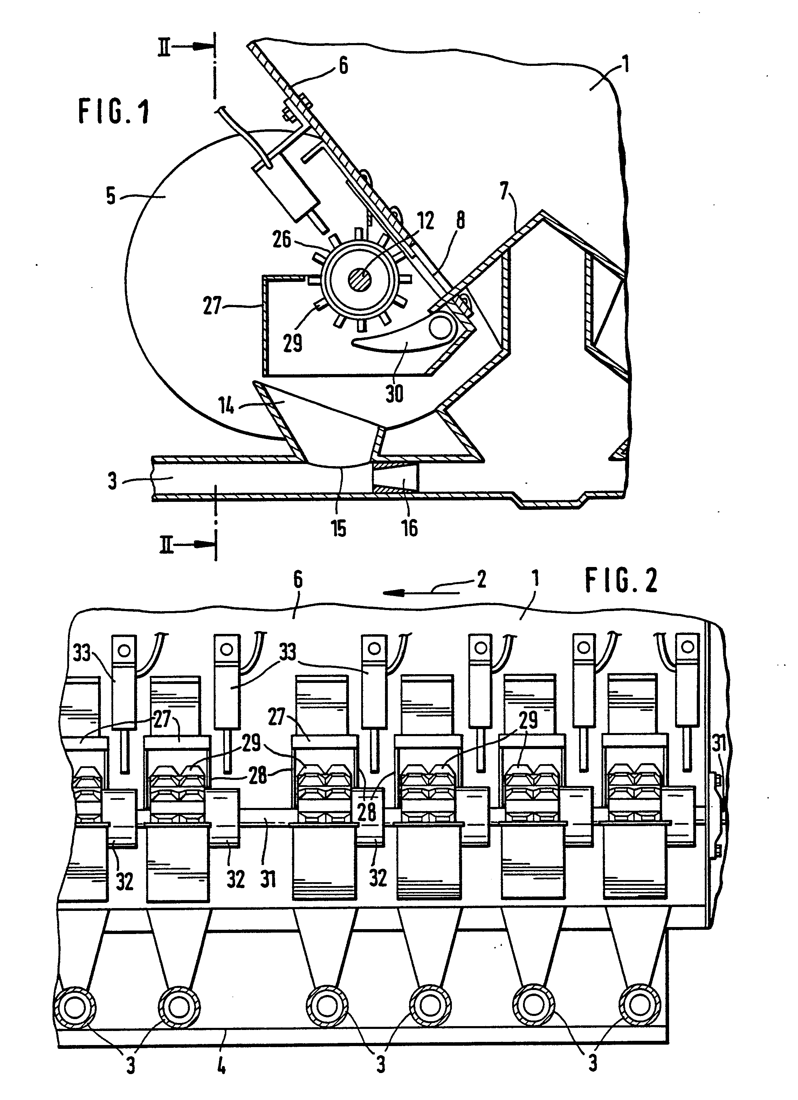

Fig. 1 die erfindungsgemäß ausgerüstete Maschine ausschnittsweise im Querschnitt und

Fig. 2 die Maschine gemäß Fig. 2 in Teilansicht im Schnitt II - II.

Die Maschine weist den Vorratsbehälter 1 und die quer zur Fahrtrichtung 2 nach beiden Seiten verlaufenden Rohrleitungen 3 auf, welche in bekannter und nicht dargestellter Weise von unterschiedlicher Länge sind und an ihren Enden je eine Ausströmöffnung aufweisen. Diese Rohrleitungen 3 sind ebenfalls an dem in Fahrtrichtung 2 verlaufenden Luftkanal 4 angeschlossen, in dem das Gebläse 5 mündet.

In beiden Seitenwänden 6 des Vorratsbehälters 1 und dicht oberhalb von dessen dachförmigem Behälterboden 7 befinden sich beiderseits die jeweils in Fahrtrichtung 2 verlaufenden, in einer Reihe angeordneten Auslauföffnungen 8, von denen wieder nur ein Teil der linken Seite des Vorratsbehälters 1 dargestellt ist. Jeder Rohrleitung 3 ist ein Dosierelement 26 zugeordnet. Die Dosierelemente 26 sind jeweils in Sägehäusen 27, die zwei Seitenwände 28 aufweisen, untergebracht. Die vor den Auslauföffnungen 8 zugeordneten Dosierelemente 26 sind als Nockensäräder 29 ausgebildet und fördern die Düngemittel über gefederte Bodenklappen 30 zu den Einlauftrichtern 14 der Rohrleitungen 3. Die Nockensäräder 29 sind lose auf den Antriebswellen 31 gelagert und werden in bekannter Weise mittels eines Regelgetriebes in veränderbaren Geschwindigkeiten angetrieben. Über die jeweils einem Nockensärad 29 zugeordneten Kupplungen 32 ist jedes Dosierelement 26 einzeln und unabhängig mit der Antriebswelle 31 kuppelbar. Durch die Fernbedienungseinrichtung 33 lassen sich die Kupplungen 32 der Dosierelemente 26 jeder Zeit unabhängig voneinander betätigen, so daß die Düngemittelzufuhr zu den einzelnen Rohrleitungen 3 jederzeit unterbrochen bzw. wiederhergestellt werden kann.

Dadurch, daß jeder Rohrleitung 3 ein eigenes, stillsetzbares Dosierelement 26 zugeordnet wird, läßt sich die Streubreite dieses Pneumatikdüngerstreuers in kleinstmöglichen Stufen verkleinern und vergrößern. Der Düngerstreuer läßt sich so vielen beliebigen Einsatzbedingungen anpassen. Die unabhängige Betätigung der einzelnen Kupplungen 32 erlaubt das Stillsetzen von Dosierelementen 26 an jeder beliebigen Stelle, so daß der Dünger beispielsweise auch in Streifen abgegeben werden kann. Die Kupplungen 32 lassen sich sowohl einzeln als auch gruppenweise betätigen.

## Ansprüche

1. Pneumatikstreuer, der mit einem Vorratsbehälter und mit im wesentlichen quer zur Fahrtrichtung verlaufenden sowie mit einem Gebläse verbundenen Rohrleitungen unterschiedlicher Länge ausgestattet ist, deren äußere Enden mit Ausströmöffnungen versehen sind, denen das Material aus dem Vorratsbehälter über Auslauföffnungen, über einen regelbaren Antrieb angetriebene Dosierelemente in einstellbaren Mengen zugeführt wird, wobei die Dosierelemente zumindest gruppenweise durch Unterbrechung ihres Antriebs stillsetzbar und so die Arbeitsbreite des Pneumatikdüngerstreuers stufenweise reduzierbar ist, dadurch gekennzeichnet, daß jeweils jeder Rohrleitung (3) ein Dosierelement (26) zugeordnet ist und jedes Dosierelement (26) für sich stillsetzbar ist, und daß jedes Dosierelement (26) für sich mit der Antriebswelle (31) kuppelbar ist.

2. Pneumatikstreuer nach Anspruch 1, dadurch gekennzeichnet, daß jedes Dosierelement (26) zwischen zwei Seitenwänden (28) angeordnet ist.

3. Pneumatikstreuer nach Anspruch 2, dadurch gekennzeichnet, daß jedes Dosierelement (26) in einem Sägehäuse (27) angeordnet ist.

4. Pneumatikstreuer nach Anspruch 3, dadurch gekennzeichnet, daß die unterhalb den Dosierelementen angeordnete Bodenplatte (30) geteilt ist, und daß jedem Dosierelement eine Bodenplatte zugeordnet ist.

5. Pneumatikstreuer nach Anspruch 1, dadurch gekennzeichnet, daß zwischen den Dosierelementen (26) jeweils eine Kupplung (32) angeordnet ist.

6. Pneumatikstreuer nach Anspruch 1 oder 5, dadurch gekennzeichnet, daß die Dosierelemente (26) über eine Fernbedienungsvorrichtung (33) stillsetzbar sind.

7. Pneumatikstreuer nach Anspruch 1, dadurch gekennzeichnet, daß zusätzlich die Dosierelemente (26) gruppen- bzw. blockweise stillsetzbar sind.

8. Pneumatikstreuer nach Anspruch 1 oder 5, dadurch gekennzeichnet, daß die Kupplungen (32) einzeln unabhängig voneinander sowie gruppenweise zu betätigen sind.

9. Pneumatikstreuer nach Anspruch 1 oder 5, dadurch gekennzeichnet, daß zusätzlich zu den Einzelkupplungen (32) Kupplungen für die gruppen- bzw. blockweise Abschaltung vorgesehen sind.

FIG.1

FIG.2

Amazonen - Werke H.Dreyer GmbH & Co.KG